# FASCICULE DE BREVET EUROPEEN

(11) **EP 4 313 748 B1**
(45) Date de publication et mention de la délivrance du brevet: **15.07.2026**
(21) Numéro de dépôt: 22706319.5
(22) Date de dépôt: 17.02.2022
(51) Int. Cl.: B62M 11/06, B62M 25/08, B62M 6/55, F16H 3/083, F16H 63/30, F16D 11/12, F16D 23/12, F16H 3/089

(54) **DISPOSITIF DE CHANGEMENT DE VITESSE ET ENGIN DE MOBILITÉ ASSOCIÉ**
GANGSCHALTVORRICHTUNG UND ZUGEHÖRIGES MOBILITÄTSFAHRZEUG
GEAR SHIFT DEVICE AND ASSOCIATED MOBILITY VEHICLE

(30) Priorité: 21.03.2021 FR 2102809
(43) Date de publication de la demande: 07.02.2024
(73) Titulaire: VALEO EMBRAYAGES, 80009 Amiens (FR)
(72) Inventeur: LAURENS, Christophe, 38070 SAINT QUENTIN FALLAVIER (FR); CAILLAUD, Jonathan, 38070 SAINT QUENTIN FALLAVIER (FR); BOULET, Jerome, 80009 Amiens (FR); YACOUBI, Nadia, 80009 Amiens (FR)
(74) Mandataire: Valeo Powertrain Systems
(86) Numéro de dépôt international: PCT/EP2022/053992
(87) Numéro de publication internationale: WO 2022/199954

(56) Documents cités:
- WO-A1-2020/174025
- DE-B3- 102017 008 376
- FR-A1- 2 865 784
- US-A- 5 924 950

## Description

La présente invention concerne le domaine des dispositifs de changement de vitesses, et plus particulièrement un dispositif de changement de vitesse pour un engin de mobilité utilisant au moins une propulsion électrique du type vélo à assistance électrique.

Lors du fonctionnement d'un engin de mobilité, une force motrice est transmise aux roues par l'intermédiaire d'un système de manivelle tournant autour d'un axe de pédalier qui entraîne la roue arrière généralement par une chaîne.

Il est déjà connu dans l'art antérieur des boites de vitesses pour engin de mobilité. Par exemple, la demande de brevet FR2975367 A1 divulgue un dispositif de changement de vitesses pour vélos comportant une boîte de vitesses à engrenages et une navette coulissante pour effectuer la sélection du rapport de vitesse. Le déplacement axial de la navette est commandé par l'intermédiaire de deux câbles reliés à une poignée tournante placée au guidon du vélo. Ce système nécessite de nombreuse pièces. Sa fabrication et sa maintenance sont complexes. En particulier la commande par câbles demande des réglage précis et réguliers.

DE 10 2017 008 376 B3 divulgue un dispositif de changement de vitesse pour véhicule à changement de vitesse actionné au pied, ledit dispositif comportant:
- un arbre de sélection dans lequel sont disposées une navette et une vis sans fin,
- au moins deux pignons de sortie agencés pour tourner librement autour de l'arbre de sélection,
- au moins deux pignons d'entrée solidaires en rotation d'un arbre creux,
- un actionneur de changement de vitesse agencé pour déplacer la navette le long de la vis sans fin entre au moins deux positions, et engager un rapport sélectionné,
- au moins deux cliquets disposés au niveau de l'arbre de sélection, chaque cliquet étant associé à un dispositif de soulèvement permettant de soulever le cliquet via la navette, et à enclencher le rapport sélectionné via les pignons d'entrée et de sortie associés, et
- au moins un système de blocage radial pour maintenir l'ensemble des cliquets d'une série, en place sur l'arbre de sélection.

Il existe un besoin pour simplifier et automatiser les boites de vitesses pour cycles.

Pour cela la présente invention propose un dispositif de changement de vitesse pour engin de mobilité du type vélo à assistance électrique défini à la revendication 1. Des modes de réalisation préférés de l'invention sont définis dans les revendications dépendantes.

Le système de blocage radial ainsi formé d'une seule pièce a son montage et sa fabrication facilités, ses coûts sont également réduits.

Selon l'invention, le système de blocage est formé d'une partie plane longitudinale à partir de laquelle s'étendent au moins deux languettes, chacune des languettes étant positionnée au-dessus d'un cliquet.

Selon l'invention, les languettes sont formées à partir d'un premier bord, parallèle à l'axe du système de blocage, de la partie plane et orientées perpendiculairement par rapport à l'axe du système de blocage.

Selon l'invention, la partie plane est insérée, via un deuxième bord opposé à celui où sont situées les languettes, dans une rainure longitudinale formée dans l'arbre de sélection.

Selon un mode de réalisation de l'invention, le deuxième bord est replié en direction de l'arbre pour s'insérer dans la rainure.

Selon un mode de réalisation de l'invention, chaque cliquet comporte un évidement dont la forme est complémentaire à celle de la languette associée de façon à ce que la languette soit logée dans l'évidement.

Selon un mode de réalisation de l'invention, le dispositif de changement de vitesse comporte sept pignons d'entrée et de sortie, sept cliquets et sept languettes.

Selon un mode de réalisation de l'invention, le dispositif de blocage comporte une languette de positionnement.

L'invention concerne également un engin de mobilité à assistance électrique, du type vélo à assistance électrique, comportant un dispositif de changement de vitesse selon l'invention,

Selon un mode de réalisation de l'invention, l'engin est un vélo à assistance électrique D'autres buts, caractéristiques et avantages de l'invention seront mieux compris et apparaîtront plus clairement à la lecture de la description faite, ci-après, en se référant aux figures annexées, données à titre d'exemple et dans lesquelles:
- la [Fig. 1] est une vue d'un engin de mobilité selon un des aspects de l'invention,
- la [Fig. 2] illustre l'ensemble de transmission de l'engin de mobilité de la Figure 1,
- les [Fig. 3a et b] illustre une vue en coupe d'une partie de l'ensemble de transmission a) et de l'ensemble de transmission b),
- la [Fig. 4] est une vue en coupe d'un dispositif de changement de vitesse selon l'invention,
- la [Fig. 5] est une vue en élévation d'une partie du dispositif de changement de vitesse avec un système de blocage selon l'invention,
- la [Fig. 6] set une vue en coupe d'une partie du dispositif de changement de vitesse avec du système de blocage selon l'invention,
- la [Fig. 7] est une vue de l'intérieur du boitier intégrant une partie de l'ensemble de transmission selon l'invention.

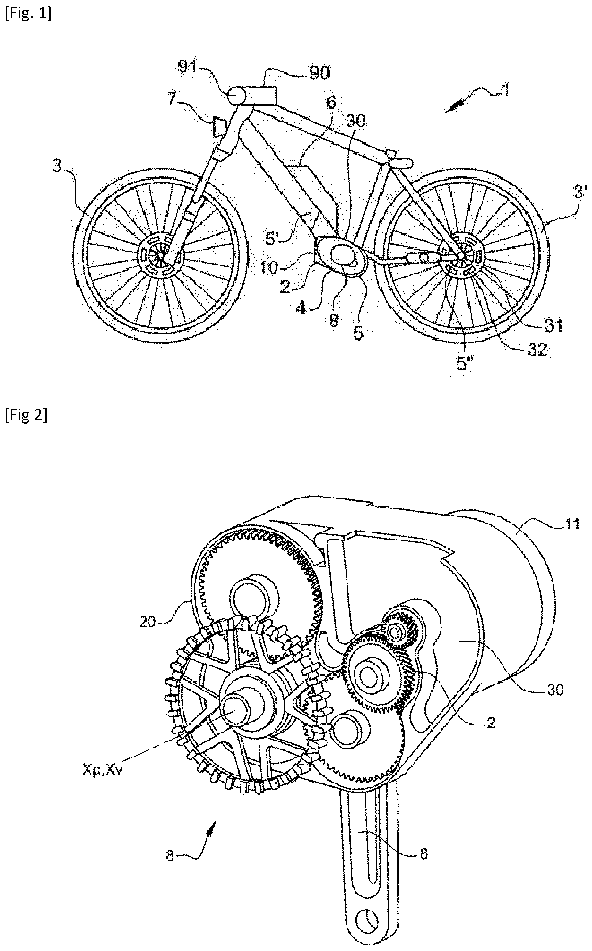

La figure 1 [Fig. 1] illustre un engin de mobilité 1 selon un des aspects de l'invention. L'engin 1 est ici un vélo à assistance électrique comportant un moteur électrique 2. Le moteur électrique 2 est agencé pour assurer une partie de la propulsion de l'engin.

Le vélo comporte au moins deux roues 3, 3 'auxquelles est fournie une force motrice, par l'intermédiaire de deux pédales tournant autour d'un axe de pédalier d'axe Xp qui entraîne la roue arrière par exemple par une chaîne, ou tout autre moyen de transmission lors de son utilisation.

L'engin 1 comporte également une unité de pilotage 4 ainsi que plusieurs capteurs 5, 5', 5", situés par exemple au niveau du pédalier, sur le cadre du vélo ou au niveau d'une roue 3, 3'.

L'engin 1 ici représenté comporte également un dispositif de stockage d'énergie sous forme d'une batterie 6, un système d'éclairage 7, un pédalier 8 d'axe Xp, un système de localisation et/ou navigation 90 ainsi qu'un système interface homme-machine 91 comportant notamment un écran tactile apte à afficher des informations pour et/ou prendre en compte les demandes dudit utilisateur. Le système interface homme-machine 91 est en particulier relié au système de localisation 90 et sert d'interface de navigation. L'invention n'est pas limitée à un système interface homme-machine particulier, et peut comporter tout système connu de l'homme du métier.

Les roues 3, 3' sont munies d'un système de freinage 31, comportant notamment des freins à disque 32.

L'engin 1 comporte un ensemble de transmission 10 illustré [Fig. 2]. L'ensemble de transmission 10 comporte un dispositif de changement de vitesse 20 selon l'invention et le moteur électrique 2 pour fournir une partie de la puissance pour la propulsion de l'engin 1.

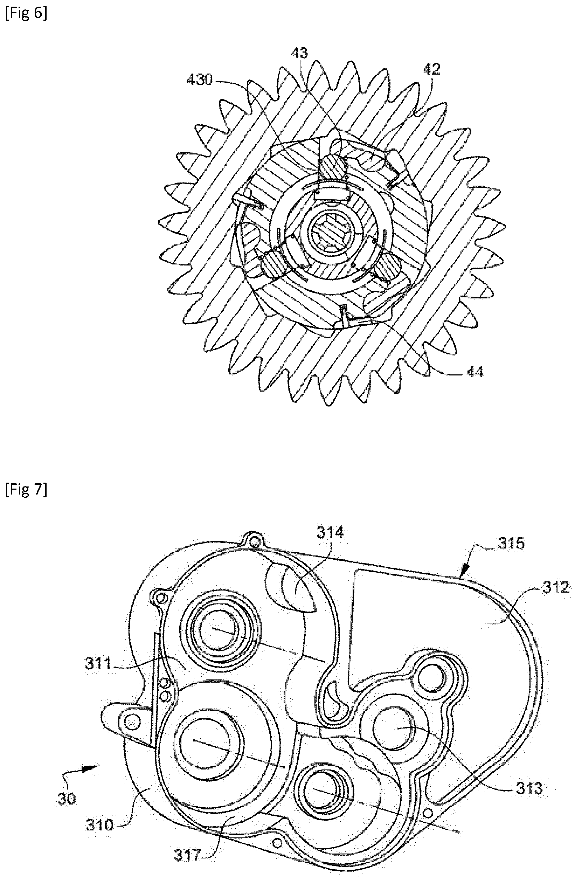

Selon un mode de réalisation de l'invention, l'ensemble de transmission 10 est au moins en partie logé dans un boîtier 30 (illustré [Fig. 7]) ici positionné au niveau du pédalier 8 dont l'axe Xp est confondu avec l'axe de sortie Xᵥ du dispositif de changement de vitesse 20.

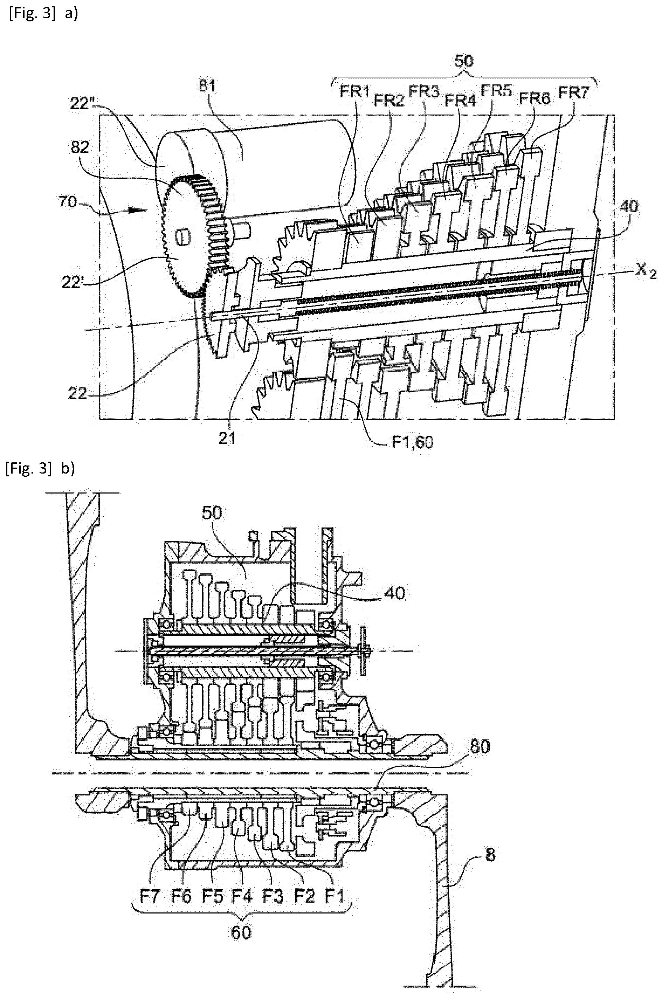

Selon l'invention, le dispositif de changement de vitesse 20 illustré [Fig. 3 a et b] comporte au moins 2 rapports, et par exemple 7 rapports entre un premier rapport dit rapport n°1 et un rapport supérieur dit rapport n°7.

Selon un mode de réalisation de l'invention, le dispositif de changement de vitesse 20 comporte une série de sept pignons de sortie 60 d'axe Xᵥ, de référence F₁ à F₇, solidaires en rotation d'un arbre creux 80 et une série de sept pignons d'entrée 50, de référence Fr₁ à Fr₇ agencés pour tourner librement autour de l'arbre de sélection 40.

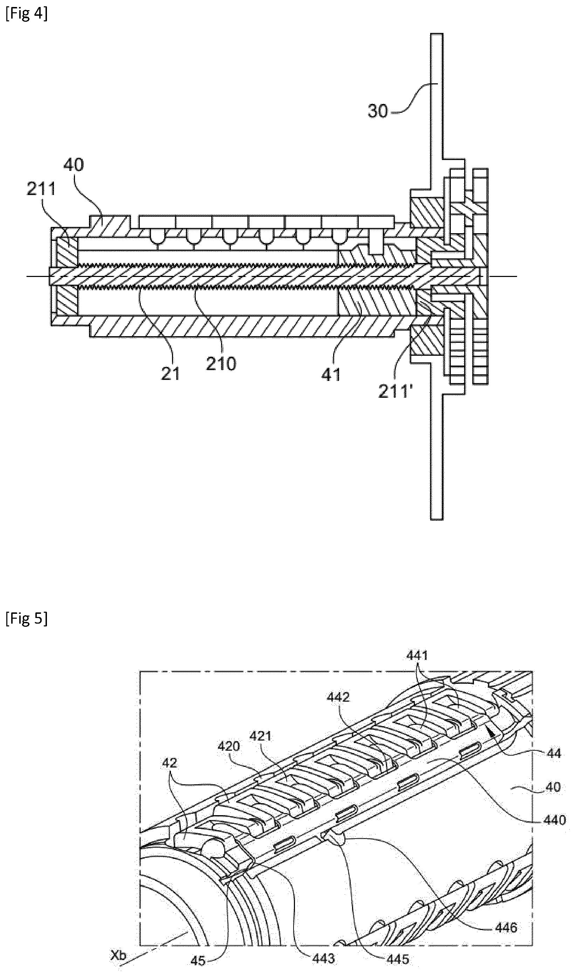

Selon un mode de réalisation de l'invention, l'arbre de sélection 40 illustré [Fig. 3] et [Fig. 4] loge une navette 41 entourant une vis sans fin 21 du dispositif de changement de vitesse 20. Selon une variante de l'invention, le dispositif de changement de vitesse 20 comporte un train épicycloïdal.

L'engin 1 selon l'invention, comporte un actionneur de changement de vitesse 70 agencé pour déplacer la navette 41 le long de la vis sans fin 21 par une liaison cinématique hélicoïdale, entre au moins 2 positions et par exemple entre 7 positions de P₁ à P₇ et engager un rapport sélectionné.

Selon un mode de réalisation de l'invention, l'arbre de sélection 40 est creux.

Selon un mode de réalisation de l'invention, l'actionneur de changement de vitesse 70 comporte des moyens électriques de déplacement de la navette 41, sous forme d'un motoréducteur. Celui-ci comporte un moteur 81 et un réducteur 82.

Selon un mode de réalisation de l'invention, le motoréducteur comporte également un pignon 22 sur l'axe de la vis sans fin 21, un pignon 22' intermédiaire et un pignon 22‴ sur l'axe du moteur 81. Les dentures des pignon 22, 22', 22" peuvent être droites comme illustré ou hélicoïdales dans une variante non illustrée.

Le guidage en rotation de la vis sans fin 21 est par exemple assuré à l'aide de roulements à chacune de ses extrémités.

Selon un mode de réalisation de l'invention, la navette 41 est configurée pour, lors de son déplacement, se positionner sous le pignon du rapport sélectionné, et enclencher ce rapport. Selon un mode de réalisation de l'invention, la navette 41 est configurée comme celle décrite dans la demande FR2975367.

Selon un mode de réalisation de l'invention, le motoréducteur comporte des pignons d'axes parallèles comme illustré [Fig. 3] ou d'axes perpendiculaires.

Selon un mode de réalisation de l'invention, l'actionneur de changement de vitesse 70 comporte un engrenage conique, droit ou hélicoïdal et/ou avec un étage ou plus.

Selon une variante de réalisation de l'invention, l'actionneur de changement de vitesse 70 a une courroie ou une chaîne ou un cardan.

Selon l'invention, illustré [Fig. 5] et [Fig. 6], le dispositif de changement de vitesse 20 comporte au niveau de l'arbre de sélection 40 au moins deux cliquets 42 et par exemple pour un engin 1 à 7 vitesses, comporte sept cliquets 42.

Selon un mode de réalisation de l'invention, le dispositif de changement de vitesse 20 comporte une série de sept cliquets disposés les uns à la suite des autres selon l'axe longitudinal X2 de l'arbre de sélection 40.

Selon un mode de réalisation de l'invention, le dispositif de changement de vitesse 20 comporte au moins une série d'au moins sept cliquets disposés les uns à la suite des autres selon l'axe longitudinal X2 de l'arbre de sélection 40.

Selon un mode de réalisation de l'invention, le dispositif de changement de vitesse 20 comporte trois séries d'au moins sept cliquets disposés les uns à la suite des autres selon l'axe longitudinal X2 de l'arbre de sélection 40. Les séries étant disposées à 120 degrés l'une de l'autre autour de l'arbre de sélection 40.

Les cliquets 42 ont une forme configurée pour coopérer avec les pignons d'entrée Fri. Les cliquets 42 sont disposés dans des évidements 420 formés sur l'arbre de sélection 40. Chaque cliquet 42 est associé à un dispositif de soulèvement, et par exemple une bille 43, visible [Fig. 4] et [Fig. 6] disposée dans un perçage 430 de l'arbre intérieur, dépassant à l'intérieur de l'arbre intérieur, placée sous chaque cliquet 42 de façon à pouvoir le soulever via la navette 41.

Lorsque la vitesse est sélectionnée, la navette 41 est positionnée sous le pignon d'entrée Fr_{I} correspondant au rapport i sélectionné, qui est alors bloqué en rotation par un des cliquets 42, et engrène avec le pignon correspondant de sortie.

Dans le cadre de l'invention, pour maintenir les cliquets 42 en place dans leur logement 420, le système de changement de vitesse comporte au moins un système de blocage radial 44 formé d'une seule pièce. C'est-à-dire un système 44 qui maintient les cliquets 42 plaqués dans leur logement, tout en leur permettant de se soulever via la bille 43 et la navette 41. Le système de blocage radial 44 est formé d'une seule pièce. Cela facilite son montage, sa fabrication et limite les couts.

Selon l'invention, le système de blocage 44 comporte une partie plane longitudinale 440.

Selon l'invention, le système 44 comporte au moins deux languettes 441, et par exemple sept languettes 441 dans le cas d'un engin à sept vitesses.

Selon l'invention, les languettes 441 sont formées à partir d'un premier bord 442, parallèle à l'axe Xb du système de blocage 44, de la partie plane 440 et orientées perpendiculairement par rapport à l'axe Xb du système de blocage 44. Le système de blocage 44 en rotation forme ainsi un peigne aux dents aplaties et écartées.

Selon l'invention, la partie plane 440 est insérée, via un deuxième bord 443 opposé à celui 442 où sont situées les languettes 441, dans une rainure 45 longitudinale, et parallèle à l'axe de l'arbre, formée dans l'arbre de sélection 40.

Selon un mode de réalisation de l'invention, ce deuxième bord 443 est replié en direction de l'arbre 40 pour s'insérer dans la rainure 45.

Le système de blocage 44 est disposé sur l'arbre de sélection 40 de façon à ce que chaque languette 441 soit positionnée sur un cliquet 42.

Selon un mode de réalisation de l'invention, chaque cliquet 42 comporte un évidement 421 dont la forme est complémentaire à celle de la languette 441 de façon à ce que la languette 441 soit logée dans l'évidement 421, et ne bouge pas lors du blocage du cliquet.

Selon un mode de réalisation de l'invention, le dispositif de blocage 44 en rotation comporte une languette de positionnement 446. Cette languette de positionnement 446 est disposée sur le deuxième bord 443 inséré dans la rainure 45. Cette languette 446 coopère avec un logement supplémentaire 445 de forme complémentaire à celle de la languette de positionnement 446 formé dans l'arbre de sélection 40. Cette languette de positionnement 446 permet aux languettes 441 du dispositif d'être centrées au-dessus des cliquets 42.

Le système de blocage 44 en rotation exerce ainsi sur chaque cliquet 42 une pression, ou force de plaquage, suffisante pour bloquer le cliquet 42 dans le logement 421 tout en lui permettant d'être soulevé par la navette 41.

Selon un mode de réalisation de l 'invention, le système de changement de vitesse comporte au moins trois systèmes de blocage 44 en rotation disposés de façon à bloquer trois séries de cliquets.

La navette 41 permet de sélectionner le rapport choisi qui va enclencher un pignon d'entrée Fri via un cliquet 42 et être bloqué en rotation grâce au système de blocage en rotation 44.

Le pignon d'entrée Fri engrène ensuite avec un pignon de sortie Fi.

Si l'engin 1 roule dans un rapport i, sans en changer, la vis sans fin 21 ne tourne pas.

Lors d'un changement de rapport de vitesse la vis sans fin 21 est entrainée en rotation par l'actionneur de changement de vitesse 70 provoquant le mouvement axial de l'écrou 210 de la vis 21 qui entraine la navette 41 et permet ainsi le passage de rapport. Grâce à la liaison pivot ainsi réalisée le mouvement de rotation de la vis sans fin 21 est transformé en mouvement de translation de la navette 41.

Selon un mode de réalisation de l'invention, une butée 211, 211' limite à chaque extrémité le déplacement de la navette 41. Selon un autre mode de réalisation de l'invention, le déplacement de la navette est contrôlé par un capteur de position.

Selon un mode de réalisation non illustré, la navette 41 est apte à prendre une position dite position neutre P0 pour laquelle aucun rapport de vitesse n'est engagé.

La [Fig. 7] illustre plus en détail le boîtier 30 de l'engin de mobilité 1de la figure 1.

Le boitier 30 comporte un carter 310 délimitant un premier logement 311 agencé pour loger les engrenages du dispositif changement de vitesse 20. Le carter 310 délimite également au moins deux deuxièmes logements 312, 313, 314, 315, distincts les uns des autres. L'ensemble de ces logements est agencé pour loger respectivement le moteur électrique 2, le réducteur 11, l'actionneur de changement de vitesse 70 et l'unité de pilotage 4 de l'engin de mobilité. Selon un mode de réalisation de l'invention, au moins un deuxième logement est étanche, et par exemple celui agencé pour contenir l'unité de pilotage 4.

Selon un mode de réalisation de l'invention, le carter 310 logeant le dispositif changement de vitesse 20 est fermé par deux flasques latéraux 317, dont un seul est illustré sur la figure 4. Le premier logement 311 présente deux ouvertures en regard dans les flasques latéraux 317 pour accueillir l'axe de pédalier de l'engin de mobilité 1.

La portée de la présente invention ne se limite pas aux détails donnés ci-dessus et permet des modes de réalisation sous de nombreuses autres formes spécifiques sans s'éloigner du domaine d'application de l'invention. Par conséquent, les présents modes de réalisation doivent être considérés à titre d'illustration, et peuvent être modifiés sans toutefois sortir de la portée définie par les revendications.

## Revendications

1. Dispositif de changement de vitesse (20) pour engin de mobilité (1) du type vélo à assistance électrique comportant :
- un arbre de sélection (40) dans lequel sont disposées une navette (41) et une vis sans fin (21),
- au moins deux pignons d'entrée (50, Fri) agencés pour tourner librement autour de l'arbre de sélection ( 40 ),
- au moins deux pignons de sortie (60, Fi) solidaires en rotation d'un arbre creux (80),
- un actionneur de changement de vitesse (70) agencé pour déplacer la navette (41) le long de la vis sans fin (21) entre au moins deux positions, et engager un rapport sélectionné,
- au moins deux cliquets (42) disposés au niveau de l'arbre de sélection (40), chaque cliquet (42) étant associé à un dispositif de soulèvement (43) permettant de soulever le cliquet via la navette (41), et à enclencher le rapport sélectionné via les pignons d'entrée et de sortie associés, et
- au moins un système de blocage radial (44), formé d'une seule pièce, pour maintenir l'ensemble des cliquets (42) d'une série , en place sur l'arbre de sélection (40), dans lequel le système de blocage (44) est formé d'une partie plane longitudinale (440) à partir de laquelle s'étendent au moins deux languettes (441), chacune des languettes (441) étant positionnée au-dessus d'un des cliquets (42) de la série et formée à partir d'un premier bord (442), parallèle à l'axe (Xb) du système de blocage (44), de la partie plane (440) et orientée perpendiculairement par rapport à l'axe (Xb) du système de blocage (44),
la partie plane (440) étant insérée, via un deuxième bord (443) opposé à celui (442) où sont situées les languettes (441), dans une rainure (45) longitudinale formée dans l'arbre de sélection (40).

2. Dispositif de changement de vitesse (20) selon la revendication 1, dans lequel le deuxième bord (443) est replié en direction de l'arbre de sélection (40) pour s'insérer dans la rainure (45).

3. Dispositif de changement de vitesse (20) selon la revendication 1 ou 2, dans lequel chaque cliquet (42) comporte un évidement (421) dont la forme est complémentaire à celle de la languette associée (441) de façon à ce que la languette (441) soit logée dans l'évidement (421).

4. Dispositif de changement de vitesse (20) selon une des revendication 1 à 3, comportant sept pignons d'entrée (50) et de sortie (70), sept cliquets (42) et sept languettes (441).

5. Dispositif de changement de vitesse (20) selon une des revendication 1 à 4, dans lequel le système de blocage radial (44) comporte une languette de positionnement (446).

6. Engin de mobilité (1) à assistance électrique, du type vélo à assistance électrique, comportant un dispositif de changement de vitesse (20) selon l'une quelconque des revendications précédentes.

7. Engin de mobilité selon la revendication 6, dans lequel l'engin (1) est un vélo à assistance électrique.

## Patentansprüche

1. Gangwechselvorrichtung (20) für ein Mobilitätsfahrzeug (1) vom Typ Elektrofahrrad, umfassend:
- eine Auswahlwelle (40), in der eine Schiebemuffe (41) und eine Schnecke (21) angeordnet sind,
- mindestens zwei Eingangsritzel (50, Fri), die so angeordnet sind, dass sie frei um die Auswahlwelle (40) drehen können,
- mindestens zwei Ausgangsritzel (60, Fi), die drehfest mit einer Hohlwelle 2 (80) verbunden sind,
- einen Gangwechselaktuator (70), der so angeordnet ist, dass er die Schiebemuffe (41) entlang der Schnecke (21) zwischen mindestens zwei Positionen verschiebt und einen ausgewählten Gang einlegt,
- mindestens zwei Klinken (42), die an der Auswahlwelle (40) angeordnet sind, wobei jede Klinke (42) mit einer Hebevorrichtung (43) verbunden ist, die es ermöglicht, die Klinke über die Schiebemuffe (41) anzuheben, und den ausgewählten Gang über die zugehörigen Ein- und Ausgangsritzel einzurasten, und
- mindestens ein radiales Sperrsystem (44), das aus einem einzigen Stück gebildet ist, um alle Klinken (42) einer Reihe an der Auswahlwelle (40) an ihrem Platz zu halten dass das Sperrsystem (44) aus einem länglichen ebenen Teil (440) gebildet ist, von dem aus sich mindestens zwei Laschen (441) erstrecken, wobei jede der Laschen (441) oberhalb einer der Klinken (42) der Reihe positioniert und von einem ersten Rand (442), der parallel zur Achse (Xb) des Sperrsystems (44) verläuft, des ebenen Teils (440) ausgehend gebildet und senkrecht zur Achse (Xb) des Sperrsystems (44) ausgerichtet ist, wobei der ebene Teil (440) über einen zweiten Rand (443), der dem Rand (442), an dem sich die Laschen (441) befinden, gegenüberliegt, in eine längliche Nut (45) eingesetzt ist, die in der Auswahlwelle (40) ausgebildet ist.

2. Gangwechselvorrichtung (20) nach Anspruch 1, bei der der zweite Rand (443) in Richtung der Auswahlwelle (40) umgebogen ist, um in die Nut (45) eingesetzt zu werden.

3. Gangwechselvorrichtung (20) nach Anspruch 1 oder 2, bei der jede Klinke (42) eine Aussparung (421) aufweist, deren Form komplementär zu der der zugehörigen Lasche (441) ist, sodass die Lasche (441) in der Aussparung (421) aufgenommen wird.

4. Gangwechselvorrichtung (20) nach einem der Ansprüche 1 bis 3, mit sieben Eingangs-(50) und Ausgangsritzeln (70), sieben Klinken (42) und sieben Laschen (441).

5. Gangwechselvorrichtung (20) nach einem der Ansprüche 1 bis 4, bei der das radiale Sperrsystem (44) eine Positionierungslasche (446) aufweist.

6. Elektrisch unterstütztes Mobilitätsfahrzeug (1) vom Typ Elektrofahrrad, das eine Gangwechselvorrichtung (20) nach einem der vorhergehenden Ansprüche umfasst.

7. Mobilitätsfahrzeug nach Anspruch 6, bei dem das Fahrzeug (1) ein Elektrofahrrad ist.

## Claims

1. Gear-shifting device (20) for a mobility vehicle (1) of the electric-assist bicycle type comprising:
- a selection shaft (40) in which a shuttle (41) and a worm screw (21) are arranged,
- at least two input sprockets (50, Fri) arranged to rotate freely around the selection shaft (40),
- at least two output sprockets (60, Fi) rotationally secured to a hollow shaft 2 (80),
- a gear-shifting actuator (70) arranged to move the shuttle (41) along the worm screw (21) between at least two positions, and to engage a selected gear ratio,
- at least two pawls (42) arranged at the level of the selection shaft (40), each pawl (42) being associated with a lifting device (43) enabling the pawl to be lifted via the shuttle (41), and to engage the selected gear ratio via the associated input and output sprockets, and
- at least one radial locking system (44), formed as a single piece, for holding all of the pawls (42) of a series in place on the selection shaft (40), wherein the locking system (44) is formed of a longitudinal planar portion (440) from which at least two tabs (441) extend, each of the tabs (441) being positioned above one of the pawls (42) of the series and formed from a first edge (442), parallel to the axis (Xb) of the locking system (44), of the planar portion (440) and oriented perpendicularly with respect to the axis (Xb) of the locking system (44), the planar portion (440) being inserted, via a second edge (443) opposite to the one (442) where the tabs (441) are located, into a longitudinal groove (45) formed in the selection shaft (40).

2. Gear-shifting device (20) according to claim 1, wherein the second edge (443) is folded in the direction of the selection shaft (40) so as to be inserted into the groove (45).

3. Gear-shifting device (20) according to claim 1 or 2, wherein each pawl (42) comprises a recess (421) whose shape is complementary to that of the associated tab (441) such that the tab (441) is housed within the recess (421).

4. Gear-shifting device (20) according to one of claims 1 to 3, comprising seven input sprockets (50) and output sprockets (70), seven pawls (42) and seven tabs (441).

5. Gear-shifting device (20) according to one of claims 1 to 4, wherein the radial locking system (44) comprises a positioning tab (446).

6. Electric-assist mobility vehicle (1), of the electric-assist bicycle type, comprising a gear-shifting device (20) according to any one of the preceding claims.

7. Mobility vehicle according to claim 6, wherein the vehicle (1) is an electric-assist bicycle.
